# EUROPÄISCHE PATENTSCHRIFT

(11) **EP 3 910 219 B1**
(45) Veröffentlichungstag und Bekanntmachung des Hinweises auf die Patenterteilung: **29.11.2023**
(21) Anmeldenummer: 21171885.3
(22) Anmeldetag: 03.05.2021
(51) Int. Cl.: G01V 15/00, F16L 11/04, F16L 1/11, F16L 11/12, B29C 48/00, B29C 48/09, B29C 48/21, B29C 48/151, B29D 23/00

(54) **VERFAHREN ZUR HERSTELLUNG VON SCHLAUCH- UND ROHRLEITUNGEN MIT RFID-CHIPS**
METHOD FOR MANUFACTURING TUBINGS AND PIPELINES WITH RFID CHIPS
PROCÉDÉ DE FABRICATION DE TUYAUX ET DE CONDUITES À PUCES RFID

(30) Priorität: 14.05.2020 DE 102020206092
(43) Veröffentlichungstag der Anmeldung: 17.11.2021
(73) Patentinhaber: ContiTech USA, Inc., Fairlawn, OH 44333 (US)
(72) Erfinder: Schmidt, Alexander, 30419 Hannover (DE); Wilke, Carsten, 30419 Hannover (DE)
(74) Vertreter: Continental Corporation

(56) Entgegenhaltungen:
- EP-A1- 1 884 811
- EP-A1- 3 284 993
- WO-A1-2017/210370
- US-A1- 2008 204 235
- US-A1- 2013 263 958

## Beschreibung

Die Erfindung betrifft ein Verfahren zur Herstellung von Schlauch- und Rohrleitungen mit RFID-Chips.

Schlauch- und Rohrleitungen sind teilweise ungünstigen Umwelt- und Betriebsbedingungen ausgesetzt, was insbesondere bei sicherheitsrelevanten Leitungen zur Folge hat, dass die Schlauch- und Rohrleitungen kontinuierlich überwacht werden müssen. Ist dies gegebenenfalls nicht möglich, ist es üblich, im Rahmen der vorbeugenden Instandhaltung Wechselintervalle festzulegen.

In beiden Fällen ist es notwendig, die Schlauch- und Rohrleitungen mindestens zu identifizieren und/oder aber mit einer kontinuierlich arbeitenden Sensorik auszustatten. Sowohl für die Identifikation als auch für die Signalübertragung von Sensoren haben sich in der Vergangenheit RFID-Chips etabliert, die auch im Bereich der Schlauch- und Rohrleitungstechnik zum Einsatz kommen.

Üblich sind RFID-Chips mit Antennen auf einem Trägermaterial in Form von Etiketten oder Streifen. Diese können nachträglich an der Schlauchaußenseite befestigt werden. Weiterhin ist es als Stand der Technik bekannt, dass die RFID-Chips auf Trägermaterial in Streifenform mit regelmäßigem Abstand zueinander und definierter Steigung um ein Kunststoffrohr gewunden bzw. spiralförmig aufgebracht werden. Die US 903 8670 B2 offenbart eine derartige Lösung. Die US 2008 204 235 A1 zeigt einen streifenförmigen, nichtleitenden Träger, der in Längsrichtung an einem stromführenden Kabel angeordnet ist.

Die nachträgliche Montage der die-Chips an der Schlauchaußenseite führt zu zusätzlichem Aufwand. Weitere Nachteile sind die Gefahr von Verlust oder Beschädigungen, fehlende Redundanz, die Verletzungsgefahr sowie die Ablagerungsmöglichkeiten von Verunreinigungen.

Die weitverbreiteten RFID-Chips auf Trägermaterial in Form von Etiketten oder Streifen eignen sich nicht zur Einbringung in den Schlauch während des Schlauchherstellungsprozesses. Durch Form, Format und bauartbedingt ergeben sich negative Auswirkungen auf die Produktperformance wie beispielsweise Delamination der Schichten, die letztlich zum Ausfall des Schlauches führen können.

In der US 2019/0 27 69 82 A1 ist eine Lösung vorgeschlagen, bei der ein Seil mit einem RFID-Faden ausgestattet ist, wobei der RFID-Faden eine fadenartige Trägerstruktur aufweist, auf der in vorbestimmten Abständen RFID-Chips angeordnet sind.

Eine derartige Fadenstruktur lässt sich statt einer Band förmigen Struktur deutlich besser in eine Elastomer Schicht eines Schlauches einbetten. Das oben erwähnte spiralförmige Aufwickeln der RFID-Fäden erfordert aber eine entsprechende Wickelvorrichtung, die bei der Schlauch- und Rohrleitungsproduktion oftmals für die verschiedenen Verstärkungslagen in den Leitungen genutzt wird und daher nicht für weitere Wickelvorgänge zur Verfügung steht. Außerdem ist mit dem Aufwickeln, insbesondere bei Leitungen mit größeren Durchmessern, ein hoher Verbrauch an RFID-Fäden verbunden.

Ein weiteres Verfahren zur Herstellung einer flexiblen Schlauchleitung, die ein Sensormaterial mit einem integrierten RFID-Chip aufweist, ist in EP 3284993 A1 offenbart.

Der Erfindung liegt die Aufgabe zugrunde, die bekannten Verfahren zur Einbettung von RFID-Chips in Schlauch- und Rohrleitungen so weiterzubilden, dass die Einbettung ohne nennenswerte Beeinflussung der mechanischen Eigenschaften des Produkts und mit geringem Materialverbrauch möglich ist.

Diese Aufgabe wird dadurch gelöst, dass das Verfahren mindestens folgende Arbeitsschritte aufweist, nämlich
a) Bereitstellung eines Schlauch- oder Rohrleitungsrohlings aus mindestens einem elastomerem und/oder thermoplastischen Basismaterial in einer Herstellvorrichtung, wobei in das Basismaterial Festigkeitsträger eingebettet sein können,
b) Einbringung einer RFID-Struktur in die Außenlage des Schlauch- oder Rohrleitungsrohlings in axialer Richtung parallel zur Längsachse des Schlauch- oder Rohrleitungsrohlings und synchron zur Vorschubgeschwindigkeit der Herstellvorrichtung,
   wobei die RFID-Struktur mindestens einen Träger aufweist und
   wobei die RFID-Struktur auf dem Träger in vorbestimmten Abständen fest angeordnete RFID-Chips aufweist.

In einer Weiterbildung der Erfindung weisen die RFID-Chips jeweils mindestens eine Antenne auf, die in Längsrichtung des Trägers jeweils vorn und/oder hinten elektrisch leitend mit den RFID-Chips verbunden sind.

In einer Weiterbildung der Erfindung ist der Träger aus einem oder mehreren Garnen aufgebaut.

In einer Weiterbildung der Erfindung sind die Antennen mit dem Träger verzwirnt.

Durch die Verzwirnung mit dem Träger sind die Antennen gut gegen Beschädigungen geschützt.

In einer Weiterbildung der Erfindung ist der Träger elektrisch leitend ausgebildet.

In einer Weiterbildung der Erfindung werden die Antennen der RFID-Chips durch den Träger gebildet.

Ist der Träger elektrisch leitend ausgebildet, beispielsweise durch ein metallisches Garn, sind separate Antennen nicht erforderlich, da der Träger diese Aufgabe mit übernehmen kann.

Die Einbringung der RFID-Trägers in den Schlauch- oder Rohrleitungsrohling parallel zur Längsachse hat den Vorteil, dass keine Wickeleinheit erforderlich ist. Die RFID-Struktur kann beispielsweise bereits während der Extrusion einer Innen- oder Zwischenlage mit Vorschubgeschwindigkeit quasi mitlaufen, wobei er von dem Schlauch- oder Rohrleitungsrohling in Vorschubrichtung mitgezogen wird. Dadurch ist auch bei unterschiedlichen Dimensionen immer ein gleichbleibender Abstand zwischen den Tags gewährleistet sofern der Abstand der Tags am Trägermaterial gleich bleibt. Außerdem ist durch den Wegfall der Windungen der Verbrauch an RFID-Strukturen deutlich reduziert.

In einer Weiterbildung der Erfindung sind die RFID-Chips mit einer Schutzumhüllung geschützt.

Die Schutzumhüllung schützt die RFID-Chips vor und während der Verarbeitung vor Umwelteinflüssen.

In einer Weiterbildung der Erfindung weist das Verfahren mindestens folgenden weiteren Arbeitsschritt auf, nämlich
c) Aufbringung einer weiteren Lage auf den Schlauch- oder Rohrleitungsrohling derart, dass die RFID-Struktur von der weiteren Lage bedeckt wird.

Die weitere Lage des Schlauch- oder Rohrleitungsrohlings schützt die RFID-Struktur gegen äußere Einflüsse.

Durch eine abschließende Vulkanisation ist die RFID-Struktur sicher in der dann fertigen Schlauch- oder Rohrleitungswand eingebettet.

Mit Hilfe der Erfindung ist eine Identifikation der Schläuche möglich, beispielsweise für Inventarisierung im Sinne einer Bestandserfassung und Bestandsmanagments der Schläuche. Des Weiteren ergibt sich daraus die Möglichkeit, die Schläuche oder Rohrleitungen gezielt lokalisieren zu können. Weiterhin lassen sich die IDs von Schlauch bzw. Rohr im Falle einer Assemblierung mit IDs der Anbauteile wie z.B. Armaturen kombinieren. Anhand einer eindeutigen ID können die Artikel zurückverfolgt werden.

Darüber hinaus können RFID-Chips mit Sensorik kombiniert werden. Dadurch können Betriebsparameter überwacht, Lebensdauervorhersagen gemacht und Ausfälle identifiziert werden. Letztlich werden dadurch Ausfallzeiten auf ein Minimum reduziert.

Durch das erfinderische Verfahren ist eine besonders einfache Herstellung derartiger Schläuche möglich.

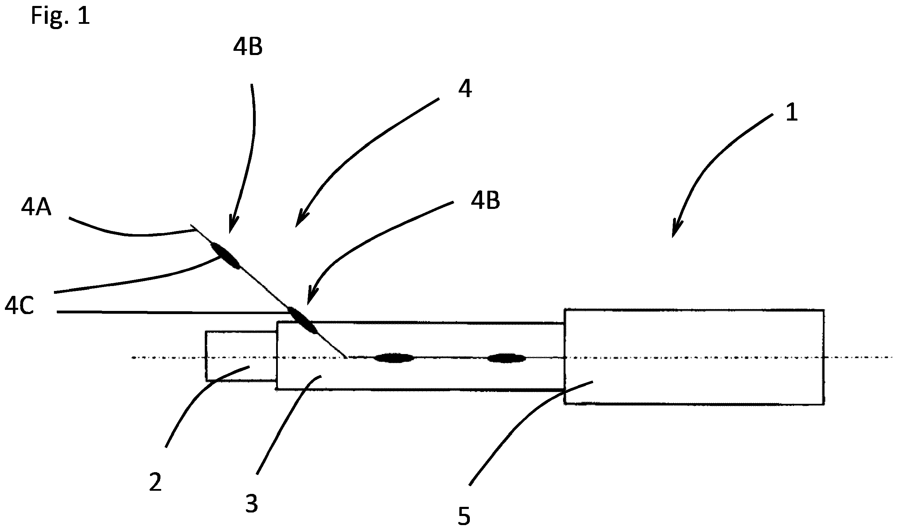

Anhand der Zeichnung wird nachstehend ein Beispiel der Erfindung näher erläutert. Die Fig. 1 zeigt eine prinzipielle Darstellung einer Schlauchleitung 1. Die Schlauchleitung 1 weist einen Innenaufbau 2 auf, der in hier nicht näher gezeigter Weise eine oder mehrere Lagen aufweist. Auf eine Zwischenschicht 3 ist eine RFID-Struktur 4 aufgebracht, die parallel zur Längsachse 5 der Schlauchleitung 1 auf der Zwischenschicht 3 aufliegt oder in dieser eingedrückt ist.

Die RFID-Struktur 4 weist einen Träger 4A und RFID-Chips 4B auf, wobei die RFID-Chips 4B um ein vorbestimmtes Maß längs des Trägers 4A voneinander beabstandet auf dem Träger 4A angeordnet und auf nicht näher gezeigte Weise mit einer Schutzumhüllung 4C umgeben sind. Die RFID-Chips 4B weisen hier nicht gezeigte Antennen auf, die in dem Träger 4A verzwirnt sind und in Trägerrichtung vor und hinter den jeweiligen RFID-Chips 4B liegen und mit den umhüllten RFID-Chips 4B elektrisch leitend verbunden sind.

Die Schlauchleitung 1 weist außerdem einer Außenschicht 5 auf, die auf dem darunterliegenden Schlauchrohlingsaufbau 2, 3, 4 aufextrudiert ist und die RFID-Struktur 4 vor und nach einer Vulkanisation zu einer fertigen Schlauchleitung vor äußeren Einflüssen schützt.

### Bezugszeichenliste (Teil der Beschreibung)

- 1: Schlauchleitung
- 2: Innenaufbau der Schlauchleitung 1
- 3: Zwischenschicht
- 4: RFID-Struktur
- 4A: Träger der RFID-Struktur 4
- 4B: RFID-Chips auf dem Träger 4A
- 4C: Schutzumhüllung der RFID Chips 4B
- 5: Außenschicht

## Patentansprüche

1. Verfahren zur Herstellung von Schlauch- und Rohrleitungen mit RFID-Chips (4A), wobei das Verfahren mindestens folgende Arbeitsschritte aufweist, nämlich
a) Bereitstellung eines Schlauch- oder Rohrleitungsrohlings (1, 2, 3) aus mindestens einem elastomerem und/oder thermoplastischen Basismaterial in einer Herstellvorrichtung, wobei in das Basismaterial Festigkeitsträger eingebettet sein können,
b) Anbringung einer RFID-Struktur (4, 4A, 4B, 4C) an dem Schlauch- oder Rohrleitungsrohling (1) in axialer Richtung parallel zur Längsachse des Schlauch- oder Rohrleitungsrohlings (1) und synchron zu einer Vorschubgeschwindigkeit der Herstellvorrichtung,
wobei die RFID-Struktur mindestens einen Träger (4A) aufweist und
wobei die RFID-Struktur (4, 4A, 4B, 4C) auf dem Träger (4A) in vorbestimmten Abständen fest angeordnete RFID-Chips (4B) aufweist.

2. Verfahren nach Anspruch 1, **dadurch gekennzeichnet, dass** die RFID-Chips (4B) jeweils mindestens eine Antenne aufweisen, die in Längsrichtung der RFID-Struktur (4A, 4B, 4C) jeweils vorn und/oder hinten elektrisch leitend mit den RFID-Chips (4B) verbunden sind.

3. Verfahren nach Anspruch 1 oder 2, **dadurch gekennzeichnet, dass** der Träger (4A) aus einem oder mehreren Garnen aufgebaut ist.

4. Verfahren nach Anspruch 3, **dadurch gekennzeichnet, dass** die Antennen mit dem Träger (4A) verzwirnt sind.

5. Verfahren nach Anspruch 2, 3 oder 4, **dadurch gekennzeichnet, dass** der Träger (4A) elektrisch leitend ausgebildet ist.

6. Verfahren nach Anspruch 5, **dadurch gekennzeichnet, dass** die Antennen der RFID-Chips (4B) durch den Träger (4A) gebildet werden.

7. Verfahren nach Anspruch mindestens einem der vorstehenden Ansprüche, **dadurch gekennzeichnet, dass** die RFID-Chips mit einer Schutzumhüllung (4C) geschützt sind.

8. Verfahren nach mindestens einem der vorstehenden Ansprüche, **dadurch gekennzeichnet, dass** das Verfahren weitere Arbeitsschritte aufweist, nämlich
c) Aufbringung einer weiteren Lage (5) auf den Schlauch- oder Rohrleitungsrohling (1) derart, dass die RFID-Struktur (4) von der weiteren Lage (5) bedeckt wird.

## Claims

1. Method for producing hoselines and pipelines with RFID chips (4A), wherein the method has at least the following working steps, specifically
a) providing a hoseline or pipeline blank (1, 2, 3) of at least one elastomeric and/or thermoplastic base material in a production device, while reinforcing elements may be embedded in the base material,
b) attaching an RFID structure (4, 4A, 4B, 4C) on the hoseline or pipeline blank (1) in the axial direction parallel to the longitudinal axis of the hoseline or pipeline blank (1) and synchronously with a feed rate of the production device,
the RFID structure having at least one carrier (4A) and
the RFID structure (4, 4A, 4B, 4C) having RFID chips (4B) securely arranged on the carrier (4A) at predetermined spaced intervals.

2. Method according to Claim 1, **characterized in that** the RFID chips (4B) have in each case at least one antenna, which are respectively connected in an electrically conducting manner to the RFID chips (4B) at the front and/or rear in the longitudinal direction of the RFID structure (4A, 4B, 4C).

3. Method according to Claim 1 or 2, **characterized in that** the carrier (4A) is made up of one or more yarns.

4. Method according to Claim 3, **characterized in that** the antennas are twisted with the carrier (4A).

5. Method according to Claim 2, 3 or 4, **characterized in that** the carrier (4A) is formed in an electrically conducting manner.

6. Method according to Claim 5, **characterized in that** the antennas of the RFID chips (4B) are formed by the carrier (4A).

7. Method according to at least one of the preceding claims, **characterized in that** the RFID chips are protected by a protective enclosure (4C).

8. Method according to at least one of the preceding claims, **characterized in that** the method has the further working steps,
specifically
c) applying a further layer (5) to the hoseline or pipeline blank (1) in such a way that the RFID structure (4) is covered by the further layer (5).

## Revendications

1. Procédé permettant de fabriquer des tuyaux et conduites à puces RFID (4A), le procédé présentant au moins les étapes suivantes consistant à
a) fournir une ébauche de tuyau ou de conduite (1, 2, 3) composée d'au moins un matériau de base élastomère et/ou thermoplastique dans un dispositif de fabrication, dans lequel des supports de renforcement peuvent être incorporés dans le matériau de base,
b) appliquer une structure RFID (4, 4A, 4B, 4C) à l'ébauche de tuyau ou de conduite (1) dans la direction axiale en parallèle à l'axe longitudinal de l'ébauche de tuyau ou de conduite (1) et en synchronisme avec une vitesse d'avance du dispositif de fabrication,
dans lequel la structure RFID présente au moins un support (4A), et
dans lequel la structure RFID (4, 4A, 4B, 4C) présente sur le support (4A) des puces RFID (4B) agencées solidement à intervalles prédéterminés.

2. Procédé selon la revendication 1, **caractérisé en ce que** les puces RFID (4B) présentent respectivement au moins une antenne qui est reliée dans la direction longitudinale de la structure RFID (4A, 4B, 4C) de manière électriquement conductrice aux puces RFID (4B) respectivement à l'avant et/ou à l'arrière.

3. Procédé selon la revendication 1 ou 2, **caractérisé en ce que** le support (4A) est composé d'un ou de plusieurs fils.

4. Procédé selon la revendication 3, **caractérisé en ce que** les antennes sont torsadées avec le support (4A).

5. Procédé selon la revendication 2, 3 ou 4, **caractérisé en ce que** le support (4A) est réalisé de manière électriquement conductrice.

6. Procédé selon la revendication 5, **caractérisé en ce que** les antennes des puces RFID (4B) sont formées par le support (4A).

7. Procédé selon au moins l'une des revendications précédentes, **caractérisé en ce que** les puces RFID sont protégées par une gaine de protection (4C).

8. Procédé selon au moins l'une des revendications précédentes, **caractérisé en ce que** le procédé présente d'autres étapes consistant à
c) appliquer une couche supplémentaire (5) sur l'ébauche de tuyau ou de conduite (1) de sorte que la structure RFID (4) est recouverte par la couche supplémentaire (5).
